# EUROPEAN PATENT APPLICATION

(11) **EP 1 958 608 A1**
(43) Date of publication of application: **20.08.2008**
(21) Application number: 06810765.5
(22) Date of filing: 28.09.2006
(51) Int. Cl.: A61J 1/05, A61J 1/10

(54) **MULTICHAMBER BAG AND GAS BARRIER FILM**

(30) Priority: 29.11.2005 JP 2005010046 U; 31.03.2006 JP 2006002383 U
(71) Applicant: OTSUKA PHARMACEUTICAL FACTORY, INC., Naruto-shi, Tokushima 772-8601 (JP)
(72) Inventor: INOUE, Fujio, Naruto-shi, Tokushima 7720041 (JP); TATEISHI, Isamu, Naruto-shi, Tokushima 7720041 (JP); TOGAWA, Akihito, Obara-cho, 7708012 (JP); TSURUOKA, Tatsuro, Itano-gun, Tokushima 7710203 (JP); YOSHINAGA, Masanobu, Tokyo 1108560 (JP)
(74) Representative: Skuhra, Udo
(86) International application number: PCT/JP2006/319318
(87) International publication number: WO 2007/063638

(57) **Abstract**

An environment friendly and inexpensive gas barrier film that allows a medicine to be clearly visible from outside and prevents erroneous administration is provided. A multichamber bag having a diluting solution chamber 3 jointed to one end side of a medicine-accommodation chamber 1 via a weak sealing part 2 and an unoccupied chamber 5 having an opening part 4 jointed to the other end side of the medicine-accommodation chamber 1 via a weak sealing part 2, wherein the medicine-accommodation chamber 1, the diluting solution chamber 3 and the unoccupied chamber 5 are made of a transparent film material and the outside of the medicine-accommodation chamber 1 is covered with a transparent gas barrier film 6, is provided.

## Description

### TECHNICAL FIELD

The present invention relates to a multichamber bag, in which a medicine and a diluting solution are held with the medicine separated from the diluting solution and mixed at the time of use, and more particularly to a multichamber bag, in which a mixed state of the medicine and the diluting solution is clearly visible from outside, and a gas barrier film used for the multichamber bag.

### BACKGROUND ART

A multichamber bag, in which a weak sealing part is provided between a medicine-accommodation chamber and a diluting solution chamber, the medicine and the diluting solution are mixed at the time of use, and a medicine having a hygroscopic property or a susceptibility to oxidation, or the like, can be held in the medicine-accommodation chamber without using a desiccant or a deoxidizer, is proposed (for example, Patent Document 1). In this example, but not shown, the multichamber bag has such a structure that both sides of the medicine-accommodation chamber are covered with, for example, a multilayer film including an aluminum processing film, an aluminum processing film on the front side can be peeled off, and a diluted medicine is administered with the diluting solution chamber having an opening part placed under and hung from the medicine-accommodation chamber.
Patent Document 1: Japanese Kokai Publication Hei-11-276547

### DISCLOSURE OF THE INVENTION

### Problems to be Solved by the Invention

However, when the medicine-accommodation chamber is covered with the multilayer film including an aluminum processing film as described above, there is a drawback that the medicine is not visible from outside. Further, in order to confirm a mixed state of the medicine and the diluting solution when the medicine is diluted with the diluting solution, an operation of peeling the aluminum processing film on the front side is troublesome. Furthermore, in the case where the diluting solution chamber is provided with the opening part, there is apprehension that the trouble of administering the medicine without mixing it in the diluting solution may occur. In addition, there has been an environmental problem that since this multichamber bag includes the aluminum processing film, not only it becomes expensive, but also it cannot be disposed of as-is.

The present invention has been made in view of the above circumstance, and it is an object of the present invention to provide an environment friendly and inexpensive multichamber bag that allows a medicine to be clearly visible from outside and prevents erroneous administration, and provide an environment friendly inexpensive gas barrier film that is transparent and has a high gas barrier property.

### Means for Solving the Problems

A multichamber bag of the present invention is characterized in that it has a diluting solution chamber that is jointed to one end side of a medicine-accommodation chamber via a weak sealing part and an unoccupied chamber having an opening part that is jointed to the other end side of the medicine-accommodation chamber via a weak sealing part, wherein the medicine-accommodation chamber, the diluting solution chamber and the unoccupied chamber are made of a transparent film material and the medicine-accommodation chamber is covered with a transparent gas barrier film that substantially prevents permeation of gas and liquid therethrough.

Further, the multichamber bag of the present invention is characterized in that it has a medicine-accommodation chamber and a diluting solution chamber having an opening part that are jointed to each other via a weak sealing part, wherein the medicine-accommodation chamber and the diluting solution chamber are made of a transparent film material and the medicine-accommodation chamber is covered with a transparent gas barrier film that substantially prevents permeation of gas and liquid therethrough.

In the above structures, by covering the medicine-accommodation chamber with a transparent gas barrier film that substantially prevents permeation of gas and liquid therethrough, it is possible to protect the medicine from the influence of oxygen or moisture without using a desiccant or a deoxidizer. Further, since the gas barrier film is transparent, the inside of the medicine-accommodation chamber can be seen externally and it is possible to clearly check the state of the accommodated medicine and the presence or absence of insoluble foreign substances after rupturing the weak sealing part to introduce the diluting solution from the diluting solution chamber into the medicine-accommodation chamber to mix it in the medicine.

Also in a production step, the contamination of the foreign substances, or the like, can be clearly detected. Further, since the medicine-accommodation chamber is covered with such a transparent gas barrier film, for example, if a label printed on both sides is attached to one side of the diluting solution chamber, there is an advantage that the label can be seen externally and read even in a state where the multichamber bag is folded into two along the weak sealing part.

In the structure, in which the medicine-accommodation chamber and the unoccupied chamber having an opening part are jointed to each other via the weak sealing part, since the medicine is necessarily administered through the unoccupied chamber in a state of being diluted with the diluting solution, the occurrence of the erroneous administration can be prevented. Further, since the medicine-accommodation chamber covered with the gas barrier film and the unoccupied chamber having an opening part are jointed to each other via the weak sealing part, it is not required that the opening part and its periphery have a barrier property, and therefore material cost can be reduced more. Furthermore, since a conventional aluminum processing film is not used, there is also an advantage that the multichamber bag can be inexpensively provided and the environmental interrelationship is improved and disposal is facilitated.

The gas barrier film may be formed by attaching a substance prepared by vapor-depositing silica or alumina on polyethylene terephthalate (PET) to an olefin resin such as polyethylene (PE), or may include a barrier film layer formed by vapor-depositing silica or alumina on polyethylene terephthalate (PET), polyvinyl alcohol (PVA) and/or an ethylene-vinyl alcohol copolymer (EVOH).

The gas barrier film preferably includes a sealant layer formed by kneading a moisture absorbent into a transparent resin material. Since the gas barrier film including such a sealant layer has high moisture absorption capacity, for example, by covering the medicine-accommodation chamber with this film, it is possible to protect the medicine from the influence of moisture or oxygen without using a desiccant or a deoxidizer. In particular, since a moisture barrier property is remarkably improved, the number of laminated layers of the barrier film layer can be reduced and the multichamber bag can be inexpensively provided. Further, since the sealant layer is transparent, the inside of the medicine-accommodation chamber can be seen externally and it is possible to clearly check the state of the accommodated medicine and the presence or absence of insoluble foreign substances in introducing the diluting solution into the medicine-accommodation chamber to mix it in the medicine, and therefore the occurrence of the erroneous administration can be inhibited.

The above-mentioned moisture absorbent may be any one selected from among one of inorganic substances, one of organic substances, one of derivatives thereof, a combination of two or more of the inorganic substances, a combination of two or more of the organic substances, and a combination of the inorganic substances and the organic substances, wherein the inorganic substances consist of calcium oxide, aluminum oxide (AlOₓ), zeolite, silica gel, dried alum, magnesium sulfate, calcium chloride, potassium sulfate, phosphorus pentaoxide, sodium carbonate and potassium carbonate, and the organic substances consist of poly(meth)acrylate, carboxymethylcellulose and polyethylene glycol. By kneading such a moisture absorbent into a resin material, a stable sealant layer can be formed.

The above-mentioned resin material may comprise one material selected from linear low-density polyethylene (LLDPE), low-density polyethylene (LDPE), polypropylene (PP), ethylene-vinyl acetate copolymer (EVA), acid copolymer, acid ester copolymer and ionomer, or a combination of the materials. Since a sealant film formed by kneading powder of the moisture absorbent such as calcium oxide (CaO) and/or aluminum oxide (AlOₓ) into such a resin material can attain a good adhesive property (heat seal, adhesion, or the like), this sealant film can be readily laminated on another film material.

The above-mentioned sealant layer may be structured so as to have a two-layer structure or a three-layer structure having another transparent resin material that has the moisture absorbent not kneaded therein and is disposed on one side or on each of both sides of the transparent resin material that has the moisture absorbent kneaded therein. Thus, the sealant layer can be protected and the lamination on another film material is facilitated. When the sealant layer has a two-layer structure, the transparent resin is preferably used for the layer to come into contact with the content of the multichamber bag (the layer that has the moisture absorbent not kneaded).

The gas barrier film may have the sealant layer disposed as the innermost layer of the gas barrier film and a barrier film layer disposed on the outer side of the sealant layer. When such an arrangement is employed, moisture absorption capacity is remarkably improved by the sealant layer, and therefore the number of laminated layers of the barrier film layer can be reduced and thereby cost reduction becomes possible.

The number of laminated layers of the barrier film layer disposed on the outer side of the sealant layer may be set to 1 to 10. By selecting the appropriate number of laminated layers according to the types of medicines within such a wide range, a desired gas barrier property can be secured.

According to the present invention, there is also provided a gas barrier film (for covering a medicine-accommodation chamber) to be used for a multichamber bag that has a diluting solution chamber that is jointed to one end side of a medicine-accommodation chamber via a weak sealing part and an unoccupied chamber having an opening part that is jointed to the other end side of the medicine-accommodation chamber via a weak sealing part, or a multichamber bag that has a medicine-accommodation chamber and a diluting solution chamber having an opening part that are jointed to each other via a weak sealing part, characterized by that the gas barrier film is formed by attaching a substance prepared by vapor-depositing silica or alumina on polyethylene terephthalate (PET) to an olefin resin such as polyethylene (PE).

According to the present invention, there is also provided a gas barrier film (for covering a medicine-accommodation chamber) to be used for a multichamber bag that has a diluting solution chamber that is jointed to one end side of a medicine-accommodation chamber via a weak sealing part and an unoccupied chamber having an opening part that is jointed to the other end side of the medicine-accommodation chamber via a weak sealing part, or a multichamber bag that has a medicine-accommodation chamber and a diluting solution chamber having an opening part that are jointed to each other via a weak sealing part, characterized by that the gas barrier film includes a barrier film layer formed by vapor-depositing silica and/or alumina on polyethylene terephthalate (PET), polyvinyl alcohol (PVA) and/or ethylene-vinyl alcohol copolymer (EVOH).

When the gas barrier film includes such a barrier film layer, it can protect the medicine from the influence of oxygen or moisture without using a desiccant or a deoxidizer in a state of covering the medicine-accommodation chamber with this film. Further, since the gas barrier film is transparent, the inside of the medicine-accommodation chamber can be seen externally and it is possible to clearly check the state of the accommodated medicine and the presence or absence of insoluble foreign substances after rupturing the weak sealing part to introduce the diluting solution from the diluting solution chamber into the medicine-accommodation chamber to mix it in the medicine.

Ii is preferable that the above-mentioned gas barrier film further includes a sealant layer formed by kneading a moisture absorbent into a transparent resin material. If the gas barrier film includes such a sealant layer, it has high moisture absorption capacity. Therefore, for example, by covering the medicine-accommodation chamber with this film, it is possible to protect the medicine from the influence of moisture or oxygen without using a desiccant or a deoxidizer. Further, since the sealant layer is transparent, the inside of the medicine-accommodation chamber can be seen externally and it is possible to clearly check the state of the accommodated medicine and the presence or absence of insoluble foreign substances in introducing the diluting solution into the medicine-accommodation chamber to mix it in the medicine, and therefore the occurrence of the erroneous administration can be inhibited. In the gas barrier film including such a sealant layer, particularly, since a moisture barrier property is remarkably improved, the number of laminated layers of the barrier film layer can be reduced and the multichamber bag can be inexpensively provided.

The above-mentioned moisture absorbent may be any one selected from among one of inorganic substances, one of organic substances, one of derivatives thereof, a combination of two or more of the inorganic substances, a combination of two or more of the organic substances, and a combination of the inorganic substances and the organic substances, wherein the inorganic substances consist of calcium oxide, aluminum oxide (AlOₓ), zeolite, silica gel, dried alum, magnesium sulfate, calcium chloride, potassium sulfate, phosphorus pentaoxide, sodium carbonate and potassium carbonate, and the organic substances consist of poly(meth)acrylate, carboxymethylcellulose and polyethylene glycol. By kneading such a moisture absorbent into a resin material, a stable sealant layer can be formed.

The above-mentioned resin material may comprise one material selected from linear low-density polyethylene (LLDPE), low-density polyethylene (LDPE), polypropylene (PP), ethylene-vinyl acetate copolymer (EVA), acid copolymer, acid ester copolymer and ionomer, or a combination of the materials. Since a sealant film formed by kneading powder of the moisture absorbent such as calcium oxide (CaO) and/or aluminum oxide (AlOₓ) into such a resin material can attain a good adhesive property (heat seal, adhesion, or the like), this sealant film can be readily laminated on another film material.

The above-mentioned sealant layer may be structured so as to have a two-layer structure or a three-layer structure having another transparent resin material that has said moisture absorbent not kneaded therein and is disposed on one side or on each of both sides of the transparent resin material that has the moisture absorbent kneaded therein. Thus, the sealant layer can be protected and the lamination on another film material is facilitated. When the sealant layer has a two-layer structure, the transparent resin is preferably used for the layer to come into contact with the content of the multichamber bag (the layer that has the moisture absorbent not kneaded).

### EFFECT OF THE INVENTION

In the multichamber bag of the present invention, since the medicine-accommodation chamber is covered with a transparent gas barrier film that substantially prevents permeation of gas and liquid therethrough, the barrier property is improved and it is possible to prevent the medicine from being affected by oxygen or moisture without using a desiccant or a deoxidizer.

The inside of the medicine-accommodation chamber can be seen externally and it is possible to clearly check the state of the accommodated medicine and the presence or absence of insoluble foreign substances in mixing the diluting solution in the medicine. Also in a production step, the contamination of the foreign substances, or the like, can be clearly detected. Further, for example, if a label printed on both sides is attached to the diluting solution chamber, there is an advantage that that label can be seen externally and read even in a state where the multichamber bag is folded in two along the weak sealing part.

Since the medicine is necessarily administered through the unoccupied chamber in a state of being diluted with the diluting solution, the occurrence of the erroneous administration can be prevented. Further, since it is not required that the opening part and its periphery have a barrier property, material cost can be reduced more. Further, since a conventional aluminum processing film is not used, there is also an advantage that the multichamber bag can be inexpensively provided and the environmental interrelationship is improved and disposal is facilitated.

Since the gas barrier film of the present invention includes a barrier film layer formed by vapor-depositing silica and/or alumina on polyethylene terephthalate (PET), polyvinyl alcohol (PVA) and/or ethylene-vinyl alcohol copolymer (EVOH), it can protect the medicine from the influence of oxygen or moisture without using a desiccant or a deoxidizer in a state of covering the medicine-accommodation chamber with this film. Further, since the gas barrier film is transparent, the inside of the medicine-accommodation chamber can be seen externally and it is possible to clearly check the state of the accommodated medicine and the presence or absence of insoluble foreign substances after rupturing the weak sealing part to introduce the diluting solution from the diluting solution chamber into the medicine-accommodation chamber to mix it in the medicine. Furthermore, since a conventional aluminum processing film is not used, there is also an advantage that the multichamber bag can be inexpensively provided and the environmental interrelationship is improved and disposal is facilitated.

### BRIEF DESCRIPTIONS OF THE DRAWINGS

FIG. 1 is a front view of a multichamber bag of a first embodiment of the present invention.
FIG. 2 is a sectional view of the above multichamber bag.

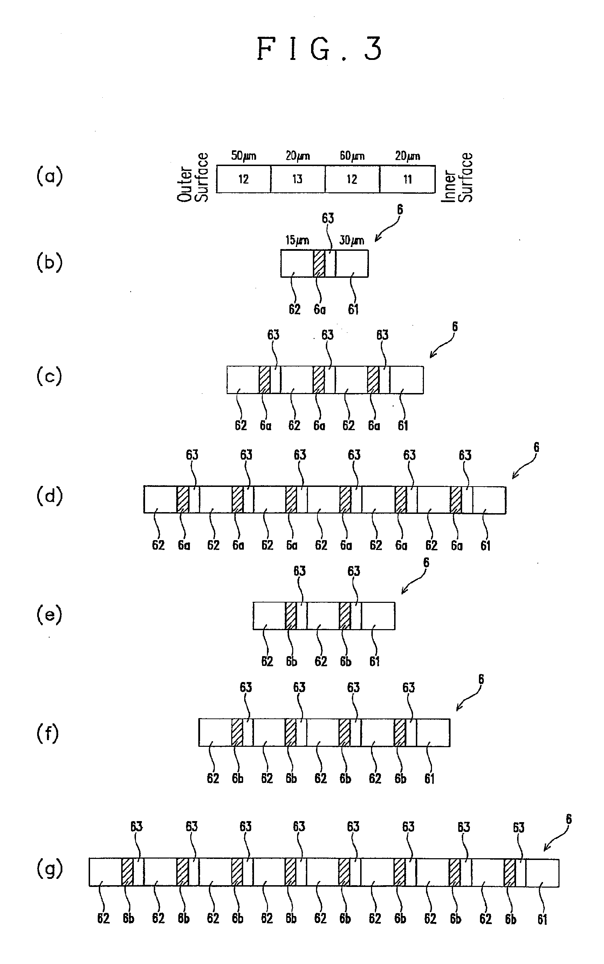

FIGS. 3 are sectional views of a gas barrier film constituting the multichamber bag of the first embodiment of the present invention, in which FIG. 3(a) is a sectional view showing the layer structure of the gas barrier film material, FIG. 3(b) is a sectional view showing the layer structure of the gas barrier film having a single-layer silica vapor deposition layer, and FIGS. 3(c), 3(d), 3(e), 3(f) and 3(g) are sectional views showing the layer structure of the gas barrier films having a three-layer silica vapor deposition layer, a six-layer silica vapor deposition layer, a two-layer alumina vapor deposition layer, a four-layer alumina vapor deposition layer and an eight-layer alumina vapor deposition layer, respectively.
FIGS. 4 are sectional views of a gas barrier film constituting a multichamber bag of a second embodiment of the present invention, in which FIG. 4(a) is a sectional view showing the layer structure of the gas barrier film material, FIG. 4(b) is a sectional view showing the layer structure of the gas barrier film and FIG. 4(c) is a sectional view showing the layer structure of another gas barrier film.

### DESCRIPTION OF THE REFERENCE NUMERALS AND SYMBOLS

- 1: medicine-accommodation chamber
- 2: weak sealing part
- 3: diluting solution chamber
- 4: opening part
- 5: unoccupied chamber
- 6: gas barrier film
- 6A: sealant layer
- 6B: barrier film layer
- 61: olefm resin
- 62: polyethylene terephthalate (PET)

### BEST MODE FOR CARRYING OUT THE INVENTION

Hereinafter, a multichamber bag of a first embodiment of the present invention will be described in detail referring to drawings.

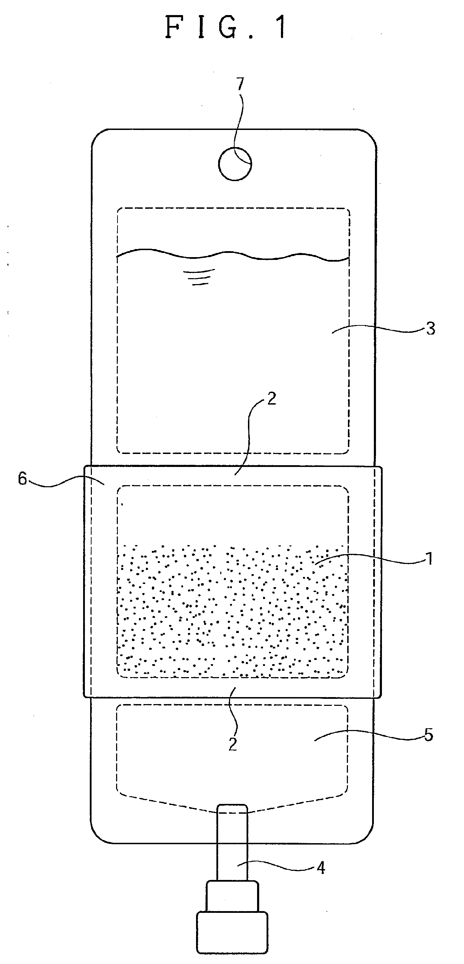

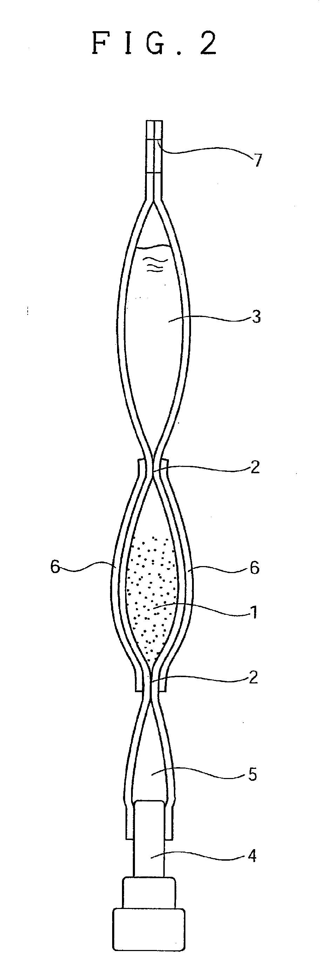

FIG. 1 is a front view of a multichamber bag, FIG. 2 is a sectional view of the multichamber bag, and FIGS. 3 are sectional views of a film material and a gas barrier film. In FIGS. 1 and 2, a reference numeral 1 indicates a medicine-accommodation chamber for accommodating various medicines such as antibiotic, a reference numeral 2 indicates a weak sealing part, 3 indicates a diluting solution chamber, 4 indicates an opening part, 5 indicates an unoccupied chamber, 6 indicates a gas barrier film, and 7 indicates a hole for suspending. In this multichamber bag, the diluting solution chamber 3 is jointed to one end side of the medicine-accommodation chamber 1via the weak sealing part 2 and on the other hand; the unoccupied chamber 5 having the opening part 4 is jointed to the other end side of the medicine-accommodation chamber 1 via the weak sealing part 2; the medicine-accommodation chamber 1, the diluting solution chamber 3 and the unoccupied chamber 5 are made of a transparent film material; and the outside of the medicine-accommodation chamber 1 is covered with the transparent gas barrier film 6.

A film material forming the medicine-accommodation chamber 1, the diluting solution chamber 3 and the unoccupied chamber 5, as shown in FIG. 3(a), has a multilayer structure composed of a mixed resin layer (thickness: 20 µm) 11 of polyethylene (PE) and polypropylene (PP) on the inner surface side, a polyethylene (PE) layer (thickness: 60 µm) 12, a cycloolefin copolymer (COC) layer or a cycloolefin polymer (COP) layer (thickness: 20 µm) 13, and a polyethylene (PE) layer (thickness: 50 µm) 12, and peripheries of two film materials are fused together by means of melting, and a weak seal is provided between the medicine-accommodation chamber 1 and the diluting solution chamber 3 and between the medicine-accommodation chamber 1 and the unoccupied chamber 5, respectively, to form weak sealing parts 2, 2, respectively.

On the other hand, the transparent gas barrier film 6 covering the outside of the medicine-accommodation chamber 1 is formed, for example, by attaching a substance prepared by vapor-depositing a silica vapor deposition layer 6a on polyethylene terephthalate (PET) (thickness: 15 µm) 62 to an olefin resin layer 61 of polyethylene (PE) (thickness: 30 µm) on the inner side of the gas barrier film via an adhesive layer 63, as shown in FIG. 3(b). Its layer structure, as shown in FIGS. 3(c) and 3(d), may be multilayer. Specifically, in the structure shown in FIG. 3(c), the silica vapor deposition layer 6a is structured so as to have a three-layer structure, and in the structure shown in FIG. 3(d), the silica vapor deposition layer 6a is structured so as to have a six-layer structure. An alumina vapor deposition layer 6b may be formed in place of the silica vapor deposition layer 6a, and for example, a two-layer alumina vapor deposition layer 6b is formed in FIG. 3(e), a four-layer alumina vapor deposition layer 6b is formed in FIG. 3(f), and an eight-layer alumina vapor deposition layer 6b is formed in FIG. 3(g).

Such a gas barrier film 6 preferably has oxygen permeability of 1 cc/m² · day · atm or less and water permeability of 1 g/m² · day(40°C, 90% RH) or less. By covering the outside of the medicine-accommodation chamber 1 with such a transparent gas barrier film 6, it is possible to prevent the medicine from being affected by oxygen or moisture without using a desiccant or a deoxidizer. In addition, the gas barrier film 6 may be fused to the periphery of the medicine-accommodation chamber 1 by means of melting.

Since the gas barrier film 6 is transparent, the inside of the medicine-accommodation chamber 1 can be seen externally and it is possible to clearly check the state of the accommodated medicine and the presence or absence of insoluble foreign substances after rupturing the weak sealing part 2 to introduce the diluting solution from the diluting solution chamber 3 into the medicine-accommodation chamber 1 to mix it in the medicine. Further, also in a production step, the contamination of the foreign substances, or the like, can be clearly detected. Further, since the medicine-accommodation chamber 1 is covered with such a transparent gas barrier film 6, for example, if a label printed on both sides is attached to one side of the diluting solution chamber 3, there is an advantage that that label can be seen externally and read in either of a state where the multichamber bag is folded into two along the weak sealing part 2 or a state where the medicine-accommodation chamber is suspended during administering the medicine.

Since the medicine-accommodation chamber 1 and the unoccupied chamber 5 having an opening part 4 are jointed to each other via the weak sealing part 2, the medicine is necessarily administered through the unoccupied chamber 5 in a state of being diluted with the diluting solution, and therefore the occurrence of the erroneous administration can be prevented. Further, since the medicine-accommodation chamber 1 covered with the gas barrier film 6 and the unoccupied chamber 5 having an opening part 4 are jointed to each other via the weak sealing part 2, it is not required that the opening part 4 and its periphery have a barrier property, and therefore material cost can be reduced more.
Further, since a conventional aluminum processing film is not used, there is also an advantage that the multichamber bag can be offered inexpensively, the environmental interrelationship is improved and disposal is facilitated.

Now, a multichamber bag of a second embodiment of the present invention will be described. A basic structure of the multichamber bag of the present embodiment is similar to that of the first embodiment. Accordingly, in the following description, the same structure as the first embodiment or a structure equivalent to that of the first embodiment is given the same name and the same symbol while referencing to FIGS. 1 and 2, thereby omitting the description thereof. Thus, only the different structures will be described.

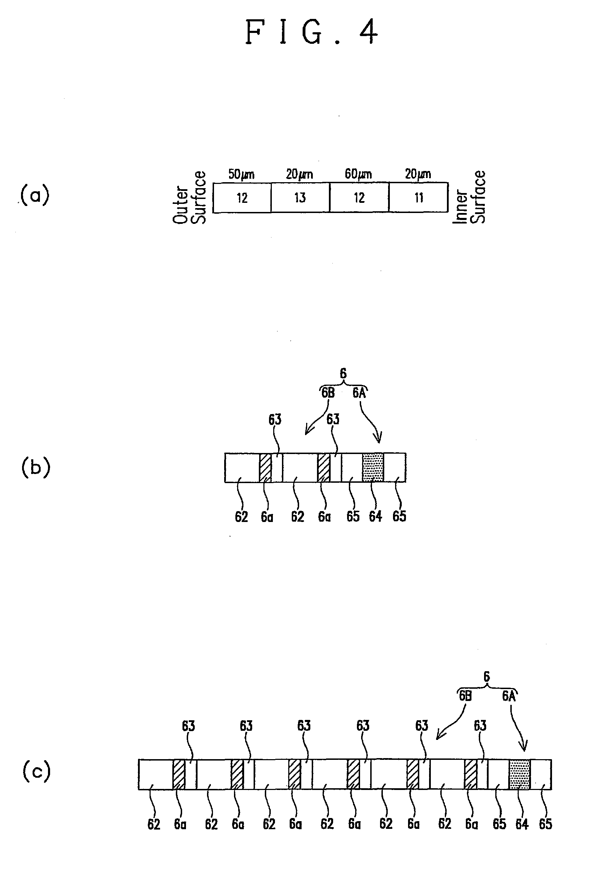

In this embodiment, a film material forming the medicine-accommodation chamber 1, the diluting solution chamber 3 and the unoccupied chamber 5, as shown in FIG. 4(a), has a multilayer structure composed of a mixed resin layer (thickness: 20 µm) 11 of polyethylene (PE) and polypropylene (PP) on the inner surface side, a polyethylene (PE) layer (thickness: 60 µm) 12, a cycloolefin copolymer (COC) layer or a cycloolefin polymer (COP) layer (thickness: 20 µm) 13, and a polyethylene (PE) layer (thickness: 50 µm) 12, and peripheries of two film materials are fused together by means of melting, and weak sealing parts 2, 2 are provided between the medicine-accommodation chamber 1 and the diluting solution chamber 3 and between the medicine-accommodation chamber 1 and the unoccupied chamber 5, respectively.

In the multichamber bag of the present embodiment, the transparent gas barrier film 6 covering the outside of the medicine-accommodation chamber 1 is formed, for example, so as to dispose a sealant layer 6A on the inner side of the gas barrier film and a barrier film layer 6B on the outer side of the sealant layer, as shown in FIG. 4(b). The sealant layer 6A has a three-layer structure formed by interposing a layer 64, formed by kneading powder such as calcium oxide (CaO) and/or aluminum oxide (AlOₓ) into linear low-density polyethylene (LLDPE), between linear low-density polyethylene (LLDPE)(a resin material of the present invention) layers 65, 65, and the barrier film layer 6B is formed by laminating two layers, each being prepared by vapor-depositing a silica vapor deposition layer 6a on polyethylene terephthalate (PET) (thickness: 12 µm) 62, on the sealant layer 6A with an adhesive layer 63 for dry-laminating interposed therebetween.

The above-mentioned barrier film layer 6B may be a six-layer as shown in FIG. 4(c), and otherwise the number of laminated layers may be appropriately selected within a range of 1 to 10. Further, the lamination of the barrier film layer 6B on the sealant layer 6A can be performed by the above-mentioned dry-laminating method or a sandwich lamination method, in which a melted resin by heating is sandwiched between layers to be laminated together. In this case, as a resin sandwiched between the barrier film layer 6B and the sealant layer 6A, a polyolefin resin having an excellent adhesive property is preferably used, and it is preferable to use a resin similar to a resin used in the sealant layer 6A from the viewpoint of an adhesive property. Furthermore, a film having an excellent gas barrier property such as polyvinyl alcohol (PVA) or an ethylene-vinyl alcohol copolymer (EVOH) may be further laminated on the gas barrier film 6 for the purpose of improving a gas barrier property.

Thus, by covering the medicine-accommodation chamber 1 with the transparent gas barrier film 6 that has the sealant layer 6A having high moisture absorption capacity as the innermost layer, it is possible to protect the medicine from the influence of moisture or oxygen without using a desiccant or a deoxidizer, and the number of laminated layers of the barrier film layer 6B, disposed on the outer side of the sealant layer 6A, can also be reduced and thereby cost reduction becomes possible. Incidentally, such a gas barrier film 6 including the sealant layer 6A preferably has oxygen permeability of 1 cc/m² · day · atm or less and water permeability of 1 g/m² · day(40°C, 90% RH) or less.

Since the gas barrier film 6 is transparent, the inside of the medicine-accommodation chamber 1 can be seen externally and it is possible to clearly check the state of the accommodated medicine and the presence or absence of insoluble foreign substances after rupturing the weak sealing part 2 to introduce the diluting solution from the diluting solution chamber 3 into the medicine-accommodation chamber 1 to mix it in the medicine, and therefore the occurrence of the erroneous administration can be inhibited. Further, since the medicine-accommodation chamber 1 is covered with the transparent gas barrier film 6, the contamination of the foreign substances, or the like, can be clearly detected also in a production step. For example, if a label printed on both sides is attached to one side of the diluting solution chamber 3, there is an advantage that that label can be seen externally and read even in a state where the multichamber bag is folded into two along the weak sealing part 2.

Furthermore, since the medicine-accommodation chamber 1 and the unoccupied chamber 5 having the opening part 4 are jointed to each other via the weak sealing part 2, the medicine is necessarily administered through the unoccupied chamber 5 in a state of being diluted with the diluting solution, and therefore the occurrence of the erroneous administration can be prevented. Since the medicine-accommodation chamber 1 covered with the gas barrier film 6 and the unoccupied chamber 5 having the opening part 4 are jointed to each other with the weak sealing part 2, it is not required that the opening part 4 and its periphery have a barrier property, and therefore material cost can be reduced more. Further, since a conventional aluminum processing film is not used, there is also an advantage that the multichamber bag can be inexpensively provided and the environmental interrelationship is improved and disposal is facilitated.

Either of the CaO powder or the AlOₓ powder is kneaded into linear low-density polyethylene (LLDPE) to form the above-mentioned sealant layer 6A, while it is possible to knead a mixture of the CaO powder and the AlOₓ powder. Further, the CaO powder and/or the AlOₓ powder may be kneaded into low-density polyethylene (LDPE), polypropylene (PP), ethylene-vinyl acetate copolymer (EVA), acid copolymer, acid ester copolymer, and/or ionomer, in place of the linear low-density polyethylene (LLDPE).

Further, in examples of FIGS. 4(b) and 4(c), the sealant layer 6A is arranged as the innermost layer of the gas barrier film 6, but the present invention is not limited to this, and a protective film layer or a barrier film layer may be laminated inside the sealant layer 6A. Further, in the examples of FIGS. 4(b) and 4(c), the sealant layer 6A has a three-layer structure, but it may be composed of only the layer 64 formed by kneading the powder of CaO and/or AlOₓ into linear low-density polyethylene (LLDPE), or may be of a sealant layer 6A having a two-layer structure formed by laminating the linear low-density polyethylene (LLDPE) layer 65 on the layer 64.

Furthermore, the moisture absorbent may be the following substances in place of CaO or AlOₓ. That is, the moisture absorbent may be any one of one material selected from inorganic substances such as zeolite, silica gel, dried alum, magnesium sulfate, calcium chloride, potassium sulfate, phosphorus pentaoxide, sodium carbonate and potassium carbonate, and organic substances such as poly(meth)acrylate, carboxymethylcellulose, polyethylene glycol and derivatives thereof, a combination of two or more of the above-mentioned inorganic substances, a combination of two or more of the above-mentioned organic substances, and a combination of the above-mentioned inorganic substances and organic substances.

Further, the present invention is not limited to any embodiment described above, and various modifications or variations in design may be appropriately made without limitation according to needs and circumstances without departing from the scope of the present invention, and diversions or conversions between the embodiments may also be made without limitation.

In the above-mentioned first embodiment, the gas barrier film 6 itself is adapted to function as a barrier film layer without providing the sealant layer 6A, but the present invention is not limited to this, and for example, a sealant layer 6A may be provided in the gas barrier film 6 (the barrier film layer) in the same manner as in the second embodiment.

Further, in the second embodiment, the gas barrier film 6 is composed of the sealant layer 6A and the barrier film layer 6B, but the structure is not limited to this, and for example, the gas barrier film 6 may be composed of a single barrier film layer 6B in the same manner as in the first embodiment. However, needless to say, it is preferable to provide the sealant layer 6A for enhancing a gas barrier property.

Further, but not shown, the gas barrier films 6 of the first and second embodiments can also be applied to, for example, a multichamber bag having a two-chamber structure, in which a medicine-accommodation chamber and a diluting solution chamber having an opening part are jointed to each other via the weak sealing part, and this medicine-accommodation chamber can be covered with the gas barrier film 6.

## Claims

1. A multichamber bag **characterized in that** it has a diluting solution chamber that is jointed to one end side of a medicine-accommodation chamber via a weak sealing part and an unoccupied chamber having an opening part that is jointed to the other end side of said medicine-accommodation chamber via a weak sealing part, wherein said medicine-accommodation chamber, said diluting solution chamber and said unoccupied chamber are made of a transparent film material and said medicine-accommodation chamber is covered with a transparent gas barrier film that substantially prevents permeation of gas and liquid therethrough.

2. A multichamber bag **characterized in that** it has a medicine-accommodation chamber and a diluting solution chamber having an opening part that are jointed to each other via a weak sealing part, wherein said medicine-accommodation chamber and said diluting solution chamber are made of a transparent film material and said medicine-accommodation chamber is covered with a transparent gas barrier film that substantially prevents permeation of gas and liquid therethrough.

3. The multichamber bag according to any one of claims 1 and 2, wherein said gas barrier film is formed by attaching a substance prepared by vapor-depositing silica or alumina on polyethylene terephthalate (PET) to an olefin resin such as polyethylene (PE).

4. The multichamber bag according to any one of claims 1 and 2, wherein said gas barrier film includes a barrier film layer formed by vapor-depositing silica or alumina on polyethylene terephthalate (PET), polyvinyl alcohol (PVA) and/or an ethylene-vinyl alcohol copolymer (EVOH).

5. The multichamber bag according to any one of claims 1 to 4, wherein said gas barrier film includes a sealant layer formed by kneading a moisture absorbent into a transparent resin material.

6. The multichamber bag according to any one of claims 4 and 5, wherein said moisture absorbent is any one selected from among one of inorganic substances, one of organic substances, one of derivatives thereof, a combination of two or more of the inorganic substances, a combination of two or more of the organic substances, and a combination of the inorganic substances and the organic substances, wherein said inorganic substances consist of calcium oxide, aluminum oxide, zeolite, silica gel, dried alum, magnesium sulfate, calcium chloride, sodium sulfate, potassium sulfate, phosphorus pentaoxide, sodium carbonate and potassium carbonate, and said organic substances consist of poly(meth)acrylate, carboxymethylcellulose and polyethylene glycol.

7. The multichamber bag according to any one of claims 4 to 6, wherein said resin material comprises one material selected from linear low-density polyethylene (LLDPE), low-density polyethylene (LDPE), polypropylene (PP), ethylene-vinyl acetate copolymer (EVA), acid copolymer, acid ester copolymer and ionomer, or a combination of the materials.

8. The multichamber bag according to any one of claims 4 to 7, wherein said sealant layer is structured so as to have a two-layer structure or a three-layer structure having another transparent resin material that has said moisture absorbent not kneaded therein and is disposed on one side or on each of both sides of the transparent resin material that has said moisture absorbent kneaded therein.

9. The multichamber bag according to any one of claims 4 to 8, wherein said gas barrier film has said sealant layer disposed as the innermost layer of the gas barrier film and a barrier film layer disposed on the outer side of the sealant layer.

10. The multichamber bag according to claim 9, wherein the number of laminated layers of the barrier film layer disposed on the outer side of said sealant layer is set to 1 to 10.

11. A gas barrier film used for the multichamber bag according to any one of claims 1 and 2, wherein said gas barrier film is formed by attaching a substance prepared by vapor-depositing silica or alumina on polyethylene terephthalate (PET) to an olefin resin such as polyethylene (PE).

12. A gas barrier film used for the multichamber bag according to any one of claims 1 and 2, wherein said gas barrier film includes a barrier film layer formed by vapor-depositing silica and/or alumina on polyethylene terephthalate (PET), polyvinyl alcohol (PVA) and/or ethylene-vinyl alcohol copolymer (EVOH).

13. The gas barrier film according to any one of claims 11 and 12, wherein said gas barrier film further includes a sealant layer formed by kneading a moisture absorbent into a transparent resin material.

14. The gas barrier film according to claim 13, wherein said moisture absorbent is any one selected from among one of inorganic substances, one of organic substances, one of derivatives thereof, a combination of two or more of the inorganic substances, a combination of two or more of the organic substances, and a combination of the inorganic substances and the organic substances, wherein said inorganic substances consist of calcium oxide, aluminum oxide, zeolite, silica gel, dried alum, magnesium sulfate, calcium chloride, sodium sulfate, potassium sulfate, phosphorus pentaoxide, sodium carbonate and potassium carbonate, and said organic substances consist of poly(meth)acrylate, carboxymethylcellulose and polyethylene glycol.

15. The gas barrier film according to any one of claims 13 and 14, wherein said resin material comprises one material selected from linear low-density polyethylene (LLDPE), low-density polyethylene (LDPE), polypropylene (PP), ethylene-vinyl acetate copolymer (EVA), acid copolymer, acid ester copolymer and ionomer, or a combination of the materials.

16. The gas barrier film according to any one of claims 13 to 15, wherein said sealant layer is structured so as to have a two-layer structure or a three-layer structure having another transparent resin material that has said moisture absorbent not kneaded therein and is disposed on one side or on each of both sides of the transparent resin material that has said moisture absorbent kneaded therein.
